Europäisches Patentamt

European Patent Office

Office européen des brevets

(19)

(11) Veröffentlichungsnummer: **0 094 591**
**B1**

(12) **EUROPÄISCHE PATENTSCHRIFT**

(45) Veröffentlichungstag der Patentschrift:
22.05.85

(21) Anmeldenummer: 83104572.9

(22) Anmeldetag: 10.05.83

(51) Int. Cl.⁴: **C 04 B 35/56**

(54) Polykristalline, praktisch porenfreie Sinterkörper aus Alpha-Siliciumcarbid, Borcarbid und freiem Kohlenstoff und Verfahren zu ihrer Herstellung.

(30) Priorität: 13.05.82 DE 3218052

(43) Veröffentlichungstag der Anmeldung:
23.11.83 Patentblatt 83/47

(45) Bekanntmachung des Hinweises auf die Patenterteilung:
22.05.85 Patentblatt 85/21

(84) Benannte Vertragsstaaten:
AT BE CH DE FR GB IT LI NL SE

(56) Entgegenhaltungen:
DE - A - 2 624 641
DE - A - 2 734 425
DE - A - 2 930 847
FR - A - 1 235 791
US - A - 4 108 929
US - A - 4 179 299

(73) Patentinhaber: Elektroschmelzwerk Kempten GmbH,
Herzog-Wilhelm-Strasse 16, D-8000 München 2 (DE)

(72) Erfinder: Schwetz, Karl Alexander, Dr., Dipl.-Ing.,
Bergstrasse 4, D-8961 Sulzberg (DE)
Erfinder: Reinmuth, Klaus, Dr., Dipl.-Chem., An der
Halde 21, D-8968 Durach (DE)
Erfinder: Hunold, Klaus, Dr., Dipl.-Ing., Hirschdorfer
Weg 3, D-8960 Kempten (DE)
Erfinder: Isemann, Franz, Am Jauchen 12,
D-8980 Oberstdorf (DE)

EP 0 094 591 B1

## Beschreibung

Sinterkörper sowohl aus polykristallinem Siliciumcarbid, als auch aus polykristallinem Borcarbid sind bekannt. Aufgrund der Schräganalogie von Bor und Silicium im Periodischen System der Elemente haben die beiden Carbide einige ähnliche Werkstoffeigenschaften, wie hohe Schmelztemperatur, geringe thermische Ausdehnung, hohe mechanische Festigkeit, ausgedrückt als Biegebruchfestigkeit bei Raumtemperatur, die auch bis zu etwa 1250° C unverändert erhalten bleibt, einen hohen Elastizitätsmodul und sehr gute chemische Beständigkeit. Grössere Unterschiede bestehen indessen hinsichtlich des spezifischen Gewichts, der Härte, der Verschleissfestigkeit, der Bruchzähigkeit, ausgedrückt als Bruchwiderstand, der Wärmeleitfähigkeit, der Thermoschock- und der Oxidationsbeständigkeit.

Werkstoffe aus Siliciumcarbid finden im Hochtemperaturmaschinenbau, z. B. als Bauteile für Gasturbinen, sowie in der Verschleisstechnik Verwendung. Werkstoffe aus Borcarbid finden ebenfalls in der Verschleisstechnik sowie aufgrund des hohen Einfangquerschnittes von Bor für thermische Neutronen in der Kerntechnik, z. B. als Regelstäbe und Abschirmungen Verwendung.

Von der Überlegung ausgehend, dass eine Kombination der unterschiedlichen Eigenschaften vorteilhaft wäre, nämlich insbesondere die hervorragende und erheblich bessere Oxidations- und Thermoschockbeständigkeit sowie die höhere Bruchzähigkeit des Siliciumcarbids mit der extrem hohen Härte, der höheren Verschleissfestigkeit und dem niedrigeren spezifischen Gewicht des Borcarbids zu vereinen, sind daher bereits Mischwerkstoffe aus Siliciumcarbid und Borcarbid bekannt geworden. Durch Variation der mengenmässigen Anteile an Siliciumcarbid und Borcarbid sollte es demnach möglich sein, Mischwerkstoffe mit für bestimmte Anwendungen gewünschten Eigenschaften, das heisst anwendungsspezifisch herzustellen.

Über erste Versuche zur Herstellung von Borcarbid/Siliciumcarbid-Mischwerkstoffen wurde bereits 1962 berichtet. Hierbei wurden Gemische aus Siliciumcarbid und 10 bis 90 Vol.-% Borcarbid in Graphitformen unter einem Druck von 7000 psi (48,2 MPa) und einer Temperatur von 2100° C heissgepresst, wobei Dichten von 93,6 bis 96% der theoretisch möglichen Dichte (im folgenden als % TD abgekürzt) erreicht wurden (vgl. W.R. Jacoby *et al.*, in „Neutron Absorber Materials for Reactor Control", Kap. 4.6 c, S. 221-222, Ed. by W. Kermit Anderson and Y.S. Theilacker, Naval Reactors, Division of Reactor Development United States Atomic Energy Commission [1962]). Desgleichen wiesen durch Heisspressen in Graphitformen unter einem Druck von 5000 psi (34,5 MPa) und einer Temperatur von 2200° C aus Siliciumcarbidpulver einer mittleren Korngrösse von 5 µm und Borcarbidpulver einer mittleren Korngrösse von 2 µm hergestellte SiC-$B_4$C-Platten mit 20 bzw. 50 Vol.-% $B_4$C eine Dichte von 3,03 bzw. 2,86 g/cm³ entsprechend 99 bzw. 100% TD auf (vgl. R.G. Gray und L.R. Lynam, „Technical Report", WAPD-261 [1963]).

Nach dem sogenannten Heisspress- oder Drucksinterverfahren lassen sich somit selbstgebundene SiC-$B_4$C-Sinterkörper, das heisst solche, die keine zusätzlichen keramischen oder metallischen Bindemittel als Begleitphase aufweisen, mit sehr geringer Porosität, die bis Null gehen kann, herstellen.

Die Formgebungsmöglichkeiten beim Drucksintern sind jedoch begrenzt, so dass hiermit nur relativ kleine und geometrisch einfache Körper hergestellt werden können. Darüber hinaus ist die Durchführung dieses Verfahrens mit einem sehr hohen Aufwand an Energie und Formenmaterial verbunden. Die Nachbearbeitung der heissgepressten Formkörper aus Siliciumcarbid und Borcarbid ist aufgrund der hohen Härte des Verbundwerkstoffes nur unter Verwendung von Diamantwerkzeugen möglich, was ebenfalls einen beträchtlichen Zeit- und Kostenaufwand erfordert.

Es wurde daher versucht, das aufwendige Heisspressverfahren auch bei der Herstellung eines Verbundwerkstoffes aus Siliciumcarbid und Borcarbid durch das sogenannte Drucklossinterverfahren zu ersetzen, das die Herstellung auch kompliziert gestalteter Formteile ohne kostspielige und zeitraubende Nachbearbeitung und die Massenproduktion im kontinuierlichen Betrieb ermöglicht.

Erste Ergebnisse über die drucklose Sinterung im System SiC-$B_4$C sind aus dem Bericht von S.R. Billington *et al.*, in „Special Ceramics 1964", S. 10-34, Ed. by P. Popper, British Ceramic Research Association, Academic Press, London und New York (1965) bekannt. Hierin wurden Probekörper, die aus α-SiC mit Zusätzen von 10 bis 30 Gew.-% $B_4$C bei Temperaturen im Bereich von 2200 bis 2300° C gesintert worden waren, untersucht. Die Sinterung erfolgt offensichtlich über die Bildung einer eutektischen Schmelzphase in Verbindung mit einer sehr starken Volumenschwindung, wobei jedoch nur eine mangelhafte Verdichtung erreicht wurde (maximale Dichte: 2,65 g/cm³, entsprechend 87,7% TD bei 30 Gew.-% $B_4$C-Zusatz).

Nicht poröse Körper im System SiC-$B_4$C können indessen durch Infiltrieren einer eutektischen Schmelze von $B_4$C-SiC in vorgeformte Körper aus α-SiC und anschliessender Erstarrung in einem Temperaturgradienten erhalten werden (vgl. US-PS Nr. 3852099). Abgesehen davon, dass die Durchführung dieses Verfahrens sehr umständlich ist, neigen derartige Körper jedoch aufgrund der unterschiedlichen Wärmeausdehnung der SiC-Matrix und dem $B_4$C-SiC-Eutektikum zur Ausbildung von Mikrorissen, so dass die so hergestellten Werkstoffe nur eine begrenzte Festigkeit aufwiesen.

Durch drucklose Sinterung können hingegen polykristalline Sinterkörper aus Siliciumcarbid, Borcarbid und freiem Kohlenstoff mit einer Dichte von mindestens 85% TD erhalten werden (vgl. US-PS Nr. 4081284, die der DE-OS Nr. 2734425 entspricht). Diese Sinterkörper bestehen aus α-

und/oder β-SiC mit einheitlichen Gefügekorngrössen von < 10 µm, 10 bis 30 Gew.-% Borcarbid in Form von im Körper gleichmässig verteilten feinen Körnern und 0,001 bis 1 Gew.-% freiem Kohlenstoff in Submikronkorngrösse.

Für die Herstellung dieser Körper wurden homogen Pulvergemische in Submikronfeinheit aus β-SiC, 10 bis 30 Gew.-% B₄C und einem Kohlenstoff enthaltenden Zusatz in einer 0,1 bis 1 Gew.-% freiem Kohlenstoff entsprechenden Menge unter Bildung von Gründkörpern vorgeformt, die anschliessend bei Temperaturen von 2000° C bis unterhalb des Schmelzpunktes des B₄C-SiC-Eutektikums in einer inerten Atmosphäre drucklos gesintert wurden.

Wie aus der Beschreibung hervorgeht, sind die eingesetzten Mengen an Borcarbid im Bereich von 10 bis 30 Gew.-%, bezogen auf das Gesamtgewicht von SiC + B₄C für die Erzielung der gewünschten Eigenschaften hinsichtlich der Dichte und der Ausbildung eines feinkörnigen Mikrogefüges im fertigen Sinterkörper von entscheidender Bedeutung. Mit weniger als 10 Gew.-% B₄C konnte das Kornwachstum während des Sinterns nicht kontrolliert werden, was zur Ausbildung von grossen tafelförmigen SiC-Kristallen führte, das heisst, es wurde kein feinkörniges Mikrogefüge erhalten, das für die mechanische Festigkeit notwendig ist. Mit mehr als 30 Gew.-% B₄C sank hingegen die Dichte unter 85% TD ab.

Desgleichen sollten Anteile an freiem Kohlenstoff in der Ausgangspulvermischung von mehr als 1 Gew.-%, bezogen auf das Gesamtgewicht von SiC + B₄C keinen Vorteil bringen, vielmehr ähnlich wirken, wie verbleibende Poren im Sintergut im Sinne einer Beeinträchtigung der erzielbaren Höchstdichte und Festigkeit.

Der Zusammenhang zwischen relativer Dichte und den B₄C-Zusätzen von bei 2080 bis 2090° C gesintertem SiC ist in einem Diagramm dargestellt, woraus ersichtlich ist, dass die maximale Dichte von 97% TD bei einem B₄C-Zusatz von 11,3 Gew.-% erreicht wurde, während bei Anteilen von mehr als 12 Gew.-% B₄C die Dichte der resultierenden B₄C-SiC-Sinterkörper bereits deutlich abnahm.

Nach diesem bekannten drucklosen Sinterverfahren können demnach nur mit B₄C-Zusätzen in einem eng begrenzten Bereich von etwa 10 bis 20 Gew.-%, bezogen auf das Gesamtgewicht von SiC + B₄C, Sinterdichten von > 95% TD erreicht werden. SiC-B₄C-Sinterkörper mit Dichten von < 95% TD sind aber aufgrund der hohen Restporosität weniger oxidationsbeständig und weniger verschleissfest, das heisst, in diesem Fall wird die gewünschte Kombination der Eigenschaften des SiC und des B₄C nicht mehr erreicht. Durch die Restporosität werden ausserdem die mechanischen Eigenschaften verschlechtert. So wurde durch eigene Versuche nachgewiesen, dass bei SiC-B₄C-Sinterkörpern mit einer Dichte von nur 90% TD die Werte für die Biegebruchfestigkeit nur noch bei ≤ 300 N/mm² liegen, die mit steigender Prüftemperatur stark abfallen.

Darüber hinaus werden bei dem bekannten Verfahren als Ausgangsmaterialien submikronfeine β-SiC-Pulver benötigt, die nicht leicht verfügbar und daher kostspielig sind.

Es stellt sich somit die Aufgabe, praktisch porenfreie Sinterkörper auf Basis Siliciumcarbid, Borcarbid und freiem Kohlenstoff zur Verfügung zu stellen, die durch Verdichten von SiC- und B₄C-Pulver in jedem beliebigen Gewichtsverhältnis im Bereich von 90:10 bis 10:90 unter Mitverwendung eines Kohlenstoff enthaltenden Zusatzes hergestellt werden können, wodurch die Auswahl der Eigenschaften gezielt gesteuert und jedem Verwendungszweck angepasst werden kann.

Die erfindungsgemässen polykristallinen, praktisch porenfreien Sinterkörper bestehen aus α-Siliciumcarbid, Borcarbid und freiem Kohlenstoff, deren mengenmässige Anteile in Gewichtsprozent im Dreistoffsystem B-Si-C durch die Trapezfläche mit den Eckpunkten

a = 89,0% B₄C − 9,9% α-SiC − 1,1% C
b = 9,9% B₄C − 89,0% α-SiC − 1,1% C
c = 9,0% B₄C − 81,0% α-SiC − 10,0% C
d = 81,0% B₄C − 9,0% α-SiC − 10,0% C

festgelegt sind. Sie haben eine Dichte von mindestens 99% der theoretisch möglichen Dichte, eine mittlere Gefügekorngrösse von < 20 µm, eine 4-Punkt-Biegebruchfestigkeit von mindestens 400 N/mm² und sie werden aus feinkörnigen Gemischen von α-Siliciumcarbid, Borcarbid, Kohlenstoff und/oder zu Kohlenstoff verkokbarem organischen Material durch druckloses Sintern und anschliessender hüllenloser Nachverdichtung der so erhaltenen Sinterkörper durch heissisostatisches Pressen im Hochdruckautoklaven unter Verwendung eines inerten Gases als Druckübertragungsmedium hergestellt.

Ggf. können die erfindungsgemässen Sinterkörper geringe Mengen metallischer und nicht metallischer Verunreinigungen von insgesamt < 1 Gew.-% enthalten, die von der Herstellung her oder als Mahlabrieb in den als Ausgangsmaterial verwendeten Pulvergemischen vorhanden sind.

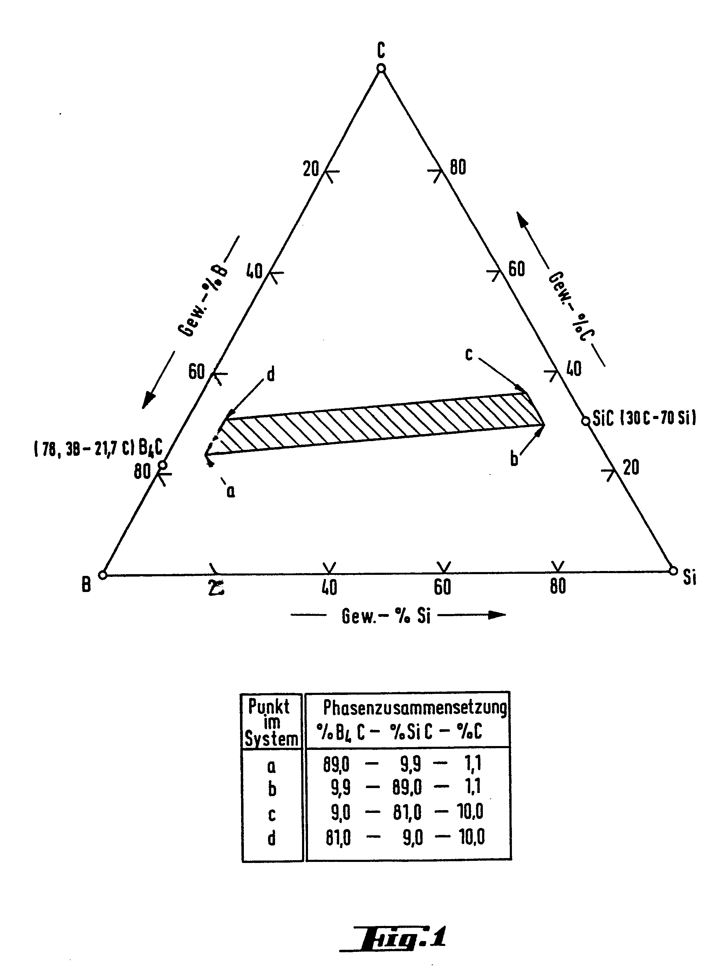

Die Phasenzusammensetzung in Gewichtsprozent der einzelnen Bestandteile SiC, B₄C und C in den erfindungsgemässen Sinterkörpern, die durch die Trapezfläche mit den Eckpunkten a, b, c und d im Dreistoffsystem B-Si-C festgelegt ist, ist in Fig. 1 graphisch dargestellt.

Durch Änderung der Zusammensetzung innerhalb dieses gegebenen Rahmens können die Eigenschaften der Sinterkörper variiert werden. Unabhängig davon zeigen jedoch alle Sinterkörper mit gewichtsmässigen Anteilen von SiC, B₄C und C in dem definierten Bereich ein homogenes, feinkörniges, im wesentlichen dreiphasiges Mikrogefüge, wobei die mittleren Korngrössen der SiC- und der B₄C-Phase bei < 20 µm, vorzugsweise bei < 5 µm und die der C-Phase bei < 2 µm liegen, sowie eine Restporosität von maximal 1 Vol.-%, wie durch keramographische Untersuchungen nachgewiesen. Unter der 4-Punkt-Biegebruchfestigkeit ist die nach der 4-Punkt-Methode gemessene Biegebruchfestigkeit zu verstehen.

Für die Herstellung der erfindungsgemässen Sinterkörper werden feinteilige Pulver aus α-Siliciumcarbid und Borcarbid im Gewichtsverhältnis

SiC/B$_4$C von 90:10 bis 10:90 mit einem Kohlenstoff enthaltenden Zusatz in Form von feinteiligem Kohlenstoff und/oder einem bei Temperaturen bis zu etwa 1000°C unter Bildung von Kohlenstoff verkokbaren organischen Material in einer etwa 1,5 bis 12 Gew.-% freiem Kohlenstoff entsprechenden Menge (zur Unterscheidung von dem in Form von SiC und B$_4$C gebundenen Kohlenstoff wird dieser Kohlenstoff frei genannt) homogen vermischt, unter Formgebung zu Grünkörpern mit einer Dichte von mindestens 50% TD verpresst, die so erhaltenen Grünkörper in Gegenwart einer Schutzgasatmosphäre oder im Vakuum bei Temperaturen von 1950 bis 2150°C zu Körpern mit einer Dichte von mindestens 95% TD drucklos gesintert und diese vorverdichteten Sinterkörper anschliessend durch heissisostatisches Pressen bei Temperaturen von 1850 bis 2150°C unter einem Gasdruck von mindestens 10 MPa hüllenlos bis zu einer Dichte von mindestens 99% TD nachverdichtet.

Durch den Kohlenstoff enthaltenden Zusatz in einer >1,5 Gew.-% freiem Kohlenstoff entsprechenden Menge in der Ausgangspulvermischung werden bei der ersten drucklosen Sinterstufe des erfindungsgemässen Verfahrens praktisch über die gesamte SiC-B$_4$C-Systembreite, das heisst bei Gewichtsverhältnissen von SiC/B$_4$C im Bereich von 90:10 bis 10:90 relative Dichten von >97% TD erreicht. Dieser Vorteil des höheren Kohlenstoffzusatzes wurde bei dem Verfahren gemäss der US-PS Nr. 4081284 nicht erkannt. Darüber hinaus ist die Verwendung von α-SiC-Pulvern anstelle von β-SiC-Pulvern nicht nur aus wirtschaftlichen Gründen vorteilhaft, sondern hierdurch wird von vornherein ausgeschlossen, dass bei den Sintertemperaturen im Bereich von etwa 2000°C durch Phasenumwandlung von β-SiC in die thermodynamisch stabilere α-Form eine sekundäre Kristallisation auftritt, die zur Ausbildung eines inhomogenen Mikrogefüges im Sinterkörper führen kann.

Für die Durchführung des erfindungsgemässen Verfahrens wird als Siliciumcarbidausgangsmaterial vorteilhaft ein Pulver mit einer maximalen Teilchengrösse von 5 μm, vorzugsweise 3 μm und einer mittleren Teilchengrösse von <1 μm, vorzugsweise <0,5 μm verwendet, das durch Intensivmahlung der kompakten Körner aus der grosstechnischen SiC-Produktion nach dem Acheson-Verfahren in der erforderlichen Kornfeinheit erhalten werden kann. Da die Bestimmung einer genauen Korngrössenverteilung bei Pulvern mit einer mittleren Korngrösse von weniger als 1 μm schwierig ist, kann die spezifische Oberfläche (gemessen nach BET) zur Auswahl eines geeigneten Materials herangezogen werden. Siliciumcarbidpulver mit einer spezifischen Oberfläche von 2-50, insbesondere im Bereich 10-20 m²/g haben sich hierbei besonders bewährt. Aufgrund der hohen Herstellungstemperatur weist das im Acheson-Prozess anfallende SiC im allgemeinen einen überwiegenden Prozentsatz der thermodynamisch stabileren α-Modifikation auf. Insbesondere kann durch Sortierung von kompakter Stückware aus den inneren Zonen der im Widerstandsofen nach Acheson gebildeten SiC-Walze ein einphasiges α-SiC gewonnen werden. Ausgehend von solchen einphasigen α-SiC-Pulvern werden die besten Ergebnisse erzielt, wobei eine chemische Reinigung bis auf eine Analysensumme von Si und C von mindestens 98 Gew.-% zweckmässig ist, um Fremdstoffe, insbesondere anhaftendes SiO$_2$ und freies Si zu entfernen, die den Sintervorgang stören und/oder zu einer unerwünschten Erhöhung des Restsauerstoff- oder Metallverunreinigungsgehaltes im fertigen Sinterkörper führen können. Sauerstoff und freier Kohlenstoff bis zu je etwa 1 Gew.-% sowie Stickstoff und metallische Verunreinigungen von insgesamt etwa 1 Gew.-% können toleriert werden.

Das als Ausgangsmaterial verwendete Borcarbidpulver wird vorteilhaft mit einer dem SiC-Pulver ähnlichen Teilchengrössenverteilung entsprechend einer maximalen Teilchengrösse von 5, vorzugsweise 3 μm, einer mittleren Teilchengrösse von <1, vorzugsweise 0,5 μm und einer spezifischen Oberfläche von 3-60, insbesondere 15-25 m²/g, eingesetzt. Auch hierbei ist es aus wirtschaftlichen Gründen vorteilhaft, von grobkörnigem, kristallinem Borcarbid auszugehen, das grosstechnisch mit einem Bor/Kohlenstoff-Atomverhältnis im Bereich um 3,8:1 bis 4,2:1 nach dem Schmelzreduktionsverfahren aus Borsäure und Kohlenstoff im elektrischen Ofen hergestellt worden ist. Dieses wird zunächst einer Intensivmahlung bis auf die erforderliche Kornfeinheit und schliesslich einer nasschemischen Reinigung bis auf eine Analysensumme von Bor und Kohlenstoff von mindestens 96 Gew.-% unterzogen. Freier Kohlenstoff bis zu etwa 1 Gew.-%, Sauerstoff bis zu etwa 3 Gew.-%, der grösstenteils in Form von hydratisiertem B$_2$O$_3$ vorliegt, sowie Stickstoff und metallische Verunreinigungen von insgesamt 1 Gew.-% können toleriert werden. Es ist auch möglich – und insbesondere zur Erzielung einer homogenen Mischung vorteilhaft – die beiden Carbide SiC und B$_4$C, ggf. nach Zusatz der erforderlichen Menge an freiem Kohlenstoff gemeinsam aufzumahlen (Mischmahlung). Auf diese Weise werden grössere, harte Agglomerate, bestehend aus den Einzelcarbiden in der Mischung vermieden. Ausserdem ist nur eine gemeinsame nasschemische Reinigung zur Entfernung der sinterhemmenden Verunreinigungen notwendig. Ebenso kann das Siliciumcarbid/Borcarbid-Gemenge, ggf. zusammen mit dem Kohlenstoff enthaltenden Zusatz und einer Mahlflüssigkeit, in einer mit dem SiC-B$_4$C-C Verbundwerkstoff ausgekleideten Mühle mit werkstoffeigenen Mahlkörpern bis auf Sinterfeinheit gemahlen werden (sog. autogene Mahlung). In diesem Falle kann auf eine nasschemische Reinigung der Sinterpulver bzw. der Sinterpulvermischung überhaupt verzichtet werden.

Der Kohlenstoff enthaltende Zusatz kann in jeder Form verwendet werden, die eine gleichmässige Verteilung in der hochdispersen Mischung gewährleistet, z. B. als partikulärer Russ oder kolloidaler Graphit mit einer spezifischen Oberfläche im Bereich von 10 bis 400 m²/g. Zur Erzielung guter Presseigenschaften der Russ oder kolloidalen Graphit enthaltenden Pulvergemische werden vorteilhaft geringe Mengen eines temporären Bindemittels und/oder Gleitmittels mitverwendet. Beispiele für derartige temporäre Bindemittel sind Polyvinylalkohol und Polystyrol; für die Gleitmittel Stearinsäure, Metallstearate und Polyäthylenglykol. Diese sog. Presshilfsmittel werden vorzugsweise in Mengen bis zu insgesamt maximal 2 Gew.-% bezogen auf die resultierende Mischung verwendet. Vorzugsweise wird jedoch der Kohlenstoff enthaltende Zusatz in Form eines organischen Materials eingesetzt, das bei Temperaturen bis zu etwa 1000° C unter Bildung von Kohlenstoff verkokt werden kann. Beispiele hierfür sind Phenoplaste und Steinkohlenteerpech, wobei sich Phenolformaldehydkondensationsprodukte vom Typ der Novolake und der Resole besonders bewährt haben, die im Bereich von 100-900° C unter Bildung von amorphem Kohlenstoff in etwa 35-50%iger Ausbeute zersetzt werden.

Bei der Einstellung des gewünschten Kohlenstoffgehaltes im Endprodukt von 1,1 bis 10,0 Gew.-% über die Menge des Kohlenstoff enthaltenden Zusatzes im Ausgangsgemisch ist der in den Siliciumcarbid- und Borcarbidausgangspulvern ggf. vorhandene freie Kohlenstoff zu berücksichtigen. Bei der Durchführung des erfindungsgemässen Verfahrens wurde nämlich überraschenderweise festgestellt, dass nicht nur von hochreinen und dadurch meist kostspieligen Carbidpulvern ($C_{frei}$-Gehalt <0,1 Gew.-%), sondern auch von technisch reinen, d. h. kohlenstoffreicheren Carbidpulvern ($C_{frei}$-Gehalt bis zu etwa 1 Gew.-%) ausgegangen werden kann. Die Menge des in der Pulvermischung, ggf. erst nach Verkokung des organischen Materials vorhandenen freien Kohlenstoffs von insgesamt 1,5 bis 12 Gew.-% ist für die Durchführung des Verfahrens und zur Erzielung der vorteilhaften Eigenschaften der Sinterkörper von ausschlaggebender Bedeutung. Geringere Mengen als 1,5 bzw. grössere Mengen als 12 Gew.-% $C_{frei}$ sind praktisch nicht mehr im gewünschten Sinne wirksam, d. h., hiermit konnte keine zur isostatischen Nachverdichtung ausreichende Vorverdichtung der Sinterkörper von ≥95% TD durch die erste, drucklose Sinterstufe mehr erzielt werden.

Dir Durchführung des erfindungsgemässen Verfahrens wird wie folgt erläutert:

Zunächst werden das Siliciumcarbid- und das Borcarbidpulver mit dem Kohlenstoff enthaltenden Zusatz homogen vermischt, was vorteilhaft dadurch erreicht wird, dass der Kohlenstoff-Zusatz in Form des organischen Materials in einem Lösungsmittel gelöst und das Gemenge aus den Carbidpulvern in der Lösung dispergiert wird. Bei Einsatz von freiem Kohlenstoff per se werden die beiden Carbidpulver gemeinsam mit dem elementaren Kohlenstoff in einer Lösung eines temporären Bindemittels und/oder Gleitmittels dispergiert. Als organische Lösungsmittel können beispielsweise Aceton oder niedere aliphatische Alkohole mit 1 bis 6 Kohlenstoffatomen Verwendung finden. Das Dispergieren kann durch mechanische Bewegung einer dünnflüssigen Suspension in Plastikbehältern unter Verwendung eines Rührers oder durch Kneten einer dickflüssigen Suspension in einer Knetvorrichtung vorgenommen werden. Dann wird das Lösungsmittel entfernt, beispielsweise bei einer dünnflüssigen Suspension durch Sprühtrocknung oder bei einer dickflüssigen Suspension durch Abdunsten während des Knetvorganges, wobei zur Zerstörung von harten Agglomeraten und Gewährleistung einer homogenen Verteilung des sinteraktivierenden, Kohlenstoff enthaltenden Zusatzes in der Regel eine Trockenmahlung in einer Strahl-, Stift- oder Kugelmühle nachgeschaltet wird. Werden hierzu Mühlenauskleidungen und/oder Mahlkörper aus Stahl, Titancarbid (Ferrotic), Titanborid oder Hartmetall (Wolframcarbid/Cobalt-Legierung) verwendet, ist darauf zu achten, die Verunreinigung des Pulvergemisches durch metallischen Mahlabrieb möglichst gering, d. h. unterhalb 1 vorzugsweise bei <0,2 Gew.-% zu halten. Durch die desagglomerierende Trockenmahlung wird das Schüttvolumen der Pulvermischung bis etwa um den Faktor 2 erhöht. Da für die meisten Formgebungsverfahren — insbesondere für das automatische Pressen — ein gut rieselfähiges Pulver mit niedrigem Schüttvolumen benötigt wird, kann die hochdisperse Pulvermischung nach der Trockenmahlung und vor der Formgebung noch einer weiteren Granulationsstufe zur Bildung möglichst weicher, pressinstabiler und freifliessender Agglomerate unterzogen werden. Diese Granulationsstufe kann entfallen, wenn beispielsweise zur Formgebung nach dem Spritzgussverfahren das Pulver mit rund 40 Vol.-% Gleit- und Bindemittel zu einer plastifizierbaren Masse weiterverarbeitet wird.

Die Formgebung zur Bildung der vorgeformten Grünkörper mit einer Dichte von mindestens 50% TD kann mittels üblicher bekannter Massnahmen vorgenommen werden, beispielsweise durch Gesenkpressen, isostatisches Pressen, Spritzgiessen, Strangpressen oder Schlickergiessen. Beim Gesenkpressen in Matrizen, bzw. beim isostatischen Pressen wird üblicherweise ein Druck von 30-600, vorzugsweise zwischen 100 bis 500 MPa, angewendet. Anschliessend werden die vorgeformten Grünkörper definitionsgemäss bei Temperaturen im Bereich von 1950 bis 2150° C drucklos gesintert. Der angegebene Temperaturbereich ist für die Erzielung der gewünschten Eigenschaften von entscheidender Bedeutung, denn es wurde nachgewiesen, dass unter gleichen Bedingungen, jedoch bei tieferen Temperaturen, Sinterkörper mit Dichten unterhalb 90% TD erhalten wurden, während bei höheren Temperaturen zwar hohe Dichten erreicht wurden, aber auf Kosten einer merklichen Kornvergröberung im Sinterkörper, was mit einer Verschlechterung der Festigkeitseigenschaften des Endproduktes verbunden war.

Bei Einsatz geringer Mengen des Kohlenstoff enthaltenden Zusatzes in Form eines verkokbaren organischen Materials wird dieses während des Aufheizvorgangs verkokt, so dass bei Beginn des eigentlichen Sintervorganges der Kohlenstoff in freier Form vorliegt. Bei den durch Spritzgiessen oder Strangpressen vorgeformten Grünkörpern, die im allgemeinen bis zu 40 Vol.-% an temporären Gleit- und Bindemitteln enthalten, sowie Grünkörpern mit höheren Anteilen eines verkokbaren organischen Materials als Kohlenstoff enthaltendem Zusatz (beispielsweise aus Ansätzen mit über 7 Gew.-% Novolak) werden die vorgeformten Grünkörper in einer getrennten Verfahrensstufe zur schonenden Entfernung der Gleit- und Bindemittel bzw. zur langsamen Verkokung des organischen Materials vorerhitzt. Das Vorerhitzen wird vorzugsweise in Gegenwart einer inerten oder reduzierenden Atmosphäre und bei Temperaturen im Bereich zwischen 100 und 1500° C durchgeführt. Wenn indessen die vorgeformten Grünkörper nur geringe Mengen an Gleit-, Bindemittel oder des verkokbaren organischen Materials aufweisen, können die vorgeformten Grünkörper auch unmittelbar nach der Formgebung der ersten Sinterstufe unterzogen werden. Die mit der Drucklossinterung verbundene lineare Schrumpfung von etwa 15-20% läuft unter Beibehaltung der ursprünglichen geometrischen Form der Grünkörper ab und ist genau erfassbar, so dass auf eine Nachbearbeitung der Sinterkörper im allgemeinen verzichtet werden kann.

Die erste drucklose Sinterstufe kann in jedem beliebigen Hochtemperaturofen durchgeführt werden, wie einem Graphitrohr-Widerstandsofen (Tammann-Ofen) oder einem induktiv beheizten Ofen mit Graphitauskleidung. Für den kontinuierlichen Betrieb wird vorteilhaft ein horizontaler Durchschubofen verwendet, in dem die vorgeformten Grünkörper durch die Heizzone des Ofens transportiert werden und zwar derart, dass sie jeweils für eine vorgesehene Zeitspanne auf der gewünschten Temperatur gehalten werden. Die Zeitspanne für das Aufheizen, das Verweilen bei der Endtemperatur und das Abkühlen sind dabei von der Grösse der zu sinternden Grünkörper abhängig. Die zu sinternden, vorgeformten Grünkörper sind zweckmässig in einem inerten Behälter untergebracht, beispielsweise in einem Tiegel aus Graphit, und von einer inerten Atmosphäre umgeben. In Gegenwart der inerten Atmosphäre, worunter eine gegenüber den Komponenten Borcarbid, Siliciumcarbid und Kohlenstoff inerte Schutzgasatmosphäre zu verstehen ist, wird der Sintervorgang vorteilhaft bei Normaldruck durchgeführt, d. h. bei einem Druck von etwa 0,1 MPa. Als Schutzgasatmosphäre können Edelgase, wie Argon oder Helium, aber auch Kohlenmonoxid oder Wasserstoff, Verwendung finden. Die Sinterung der Formkörper kann jedoch auch im Vakuum durchgeführt werden, wobei sich ein Druck von <5000 Pa besonders bewährt hat. Die nach der ersten drucklosen Sinterstufe erhaltenen vorverdichteten Formkörper weisen eine Dichte von mindestens 95, vorzugsweise von über 97% TD auf, wobei die verbleibende Restporosität ausschliesslich in Form von geschlossenen Porenräumen vorliegt. Die durch die Drucklossinterung erzielte Mindestdichte von 95% TD ist für die zweite Stufe des erfindungsgemässen Verfahrens, d. h. für die heissisostatische Nachverdichtung der vorverdichteten Körper bis auf ≥99% TD von ausschlaggebender Bedeutung, da durch eigene Versuche nachgewiesen wurde, dass porösere $B_4C$-SiC-C- Sinterkörper mit Dichten <95% TD, bereits überwiegend Kanalporen, d. h. offene Porosität aufweisen, so dass sie nicht mehr hüllenlos heissisostatisch nachverdichtet werden können. Beim Vorliegen von Kanalporen kann das als druckübertragendes Medium dienende Gas den vorverdichteten Körper durch seinen Druck sogar aufblähen, was eine Verringerung der Dichte zur Folge hätte, d. h. in diesem Fall würde die heissisostatische Nachverdichtung nicht zu einer Poreneliminierung führen.

Für die Durchführung der zweiten Stufe des erfindungsgemässen Verfahrens, d. h. der Nachverdichtung, werden die vorverdichteten Körper mit einer Dichte von mindestens 95, vorzugsweise 97% TD, in einem Hochdruckautoklaven mit Graphit- Heizelementen unter Verwendung eines inerten Gases als Druckübertragungsmedium bei einem Druck von 10 bis 250 MPa und bei einer Temperatur im Bereich von 1800 bis 2100° C hüllenlos isostatisch heissgepresst, d. h. ohne eine zusätzliche, vakuumdicht geschlossene Hülle aus duktilem Material. Derartige Hochdruck-Autoklavenöfen können eine grosse Heizzone haben, so dass zahlreiche vorgesinterte Körper untergebracht und gemeinsam nachverdichtet werden können. Durch die allseitige Druckaufgabe über ein Gas wird eine gleichmässige Verdichtung der vorgesinterten Körper bis auf ≥99% TD texturfrei erreicht, d. h. die Eigenschaftswerte der porenfreien Sinterkörper sind in allen Richtungen gleich. Der angewendete Druck liegt vorzugsweise im Bereich von 150 bis 250 MPa, der unter langsamer Erhöhung bei der jeweils angewendeten Endtemperatur erreicht wird, die vorzugsweise im Bereich von 1950 bis 2050° C liegt. Bei Verwendung niederer Gasdrücke von z. B. 10 MPa wird die Nachverdichtung am besten bei der Drucklossintertemperatur durchgeführt. Bei Anwendung höherer Gasdrücke, z. B. über 100 MPa, kann die Nachverdichtung im allgemeinen bereits bei einer um etwa 100° C tieferen Temperatur als bei der Drucklossinterung durchgeführt werden. Bei der Nachverdichtung tritt praktisch kein Kornwachstum auf, so dass die porenfreien Endkörper im wesentlichen dieselbe mittlere Korngrösse wie die vorverdichteten drucklos gesinterten Körper aufweisen.

Da durch den allseitig wirkenden Druck Mikrorisse bzw. Mikroporen beseitigt oder in ihrer Wirkung vermindert werden, zeigen die erfindungsgemässen Sinterkörper von ≥99% TD eine deutlich höhere Festigkeit als die ausschliesslich durch Drucklossinterung vorverdichteten.

Neben der weitgehenden Beseitigung der Restporosität und Verbesserung der Biegebruchfestigkeit wurden Verbesserungen anderer mechanisch-technologischer Eigenschaften, wie Kriechfestigkeit, Verschleissfestigkeit, Schlagfestigkeit u. a. festgestellt.

Die erfindungsgemässen praktisch porenfreien Sinterkörper aus $\alpha$-Siliciumcarbid, Borcarbid und Kohlenstoff sind vielseitig verwendbare Verbundwerkstoffe. Sie können auf allen Anwendungsgebieten eingesetzt werden, die hohe Härte und Verschleissfestigkeit, gute Hochtemperaturfestigkeit und Korrosionsbeständigkeit, bzw. eine Kombination dieser Eigenschaften erfordern. Da nach dem erfindungsgemässen Verfahren auch Bauteile mit komplizierter Gestalt ohne kostspielige Nachbearbeitung hergestellt werden können, ist beispielsweise der wirtschaftliche Einsatz dieser Verbundwerkstoffe im Hochtemperaturmaschinenbau möglich.

Die für bestimmte Anwendungen vorteilhaften Zusammensetzungen können am besten anhand der in Fig. 1 dargestellten Trapezfläche mit den Eckpunkten a, b, c und d im Dreistoffsystem B-Si-C erläutert werden: Die siliciumcarbidreichen Verbundwerkstoffe mit einem $SiC/B_4C$-Gewichtsverhältnis im Bereich von 90:10 bis etwa 60:40 entsprechend dem rechten Teil der Trapezfläche in Richtung auf die Punkte b-c können aufgrund der Forderung nach guter Oxidations- und Thermoschockbeständigkeit insbesondere als Hochtemperaturwerkstoffe für den Motorenbau eingesetzt werden.

Bei gleichzeitiger Erhöhung des Kohlenstoffgehaltes im Verbundwerkstoff, entsprechend dem oberen Teil der Trapezfläche in Richtung auf die Punkte c-d kann der Elastizitätsmodul verringert werden, wodurch der Zahlenwert für das Verhältnis Festigkeits-/Elastizitäts-Modul zunimmt, was zusätzlich eine positive Wirkung auf die Thermoschockbeständigkeit hat. Durch eigene Versuche wurde festgestellt, dass Verbundwerkstoffe mit 6 Gew.-% freiem Kohlenstoff einen um etwa 16% niedrigeren Elastizitätsmodul aufweisen als heissgepresste, kohlenstofffreie $SiC$-$B_4C$-Verbundwerkstoffe.

Mit zunehmendem Gehalt an freiem Kohlenstoff und Borcarbid verringert sich die theoretische Dichte dieser siliciumcarbidreichen Hochtemperaturwerkstoffe, was zu sehr günstigen Werten für das Festigkeits-/Dichte-Verhältnis führt, das ein wichtiger strukturmechanischer Kennwert ist. Da der freie Kohlenstoff in den Verbundwerkstoffen als Graphit gleichmässig über die gesamte $SiC$-$B_4C$-Matrix partikulär verteilt vorliegt, werden durch höhere Kohlenstoffanteile ($C_{frei}$-Gehalt 5 bis 10 Gew.-%) verbesserte Gleiteigenschaften der Verbundwerkstoffe erzielt, so dass diese mit besonderem Vorteil für Gleitringe, Gegenringe in Gleitringdichtungen, Lagerbuchsen und Kugellager verwendet werden können. Aufgrund der chemischen Beständigkeit der Verbundwerkstoffe gegenüber Säuren, Säuregemischen und alkalischen Lösungen hat sich der Einsatz derartiger Formteile insbesondere im chemischen Apparatebau bewährt. Die Verbundwerkstoffe werden erst durch oxidierende Alkalischmelzen bei Temperaturen > 300 bis 500° C angegriffen.

Die borcarbidreichen Verbundwerkstoffe mit einem $SiC/B_4C$-Gewichtsverhältnis im Bereich von etwa 50:50 bis 10:90, entsprechend dem linken Teil der Trapezfläche in Richtung auf die Punkte a-d können insbesondere auf dem Gebiet der Kerntechnik, beispielsweise als Neutronenabsorberwerkstoffe für Abschirmungen, sowie der Verschleisstechnik, beispielsweise als Verschleissschutz im allgemeinen Maschinenbau Verwendung finden.

Die ausgezeichnete Verschleissfestigkeit der borcarbidreichen Verbundwerkstoffe ist darauf zurückzuführen, dass sie infolge des SiC-Anteils eine höhere Bruchzähigkeit, Wärmeleitfähigkeit und Oxidationsbeständigkeit als das reine Borcarbid aufweisen, die Härte des Verbundes jedoch durch die Borcarbidmatrix bestimmt wird. Da diese Verbundwerkstoffe aufgrund des hohen Borcarbidanteils ein geringes Gewicht haben, können sie als sogenannte keramische Panzerungen zur Geschossabwehr für den Schutz von Personen und Geräten verwendet werden. Gegenüber den für diesen Zweck bekannten Panzerplatten auf Basis von reinem Borcarbid, die zudem durch Heisspressen hergestellt werden müssen, haben die borcarbidreichen Verbundwerkstoffe gemäss der Erfindung den Vorteil der Verwendung von preisgünstigerem Ausgangsmaterial und der einfacheren Formgebungsmöglichkeiten bei der Herstellung.

Die in der Beschreibung und den folgenden Beispielen der Erfindung für die Formkörper im Grünzustand, Sinterzustand sowie nachverdichteten Sinterzustand angegebenen relativen Dichten in Prozent TD sind jeweils auf die theoretische Dichte der Verbundwerkstoffe bezogen. Diese wurde aus der endgültigen Phasenzusammensetzung $B_4C$-$SiC$-$C$ (Gew.-%) der Verbundwerkstoffe nach der Mischungsregel gemäss

$$TD = \frac{100}{\dfrac{\text{Gew.-\% } SiC}{3,21} + \dfrac{\text{Gew.-\% } B_4C}{2,52} + \dfrac{\text{Gew.-\% } C}{2,27}} \ (g/cm^3)$$

berechnet.

*Beispiel 1*

Ausgegangen wurde von technisch reinen, durch Intensivmahlung in einer Attritor-Mühle bis auf hohe spezifische Oberflächen von 17,6 m²/g (Acheson-$SiC$) bzw. 25,3 m²/g ($B_4C$) gemahlenen Carbidpulvern. Die chemischen Analysen dieser Pulver, die eine maximale Teilchengrösse von 3 μm aufwiesen, sind in Tabelle 1 zusammengestellt. Als Kohlenstoff enthaltender Zusatz wurde ein handelsübliches, pulverförmiges Phenolformaldehydharz vom Novolak-Typ (z. B. Alnovol® der Fa. Hoechst AG) verwendet. Auf ein Gemenge bestehend aus 80 Gew.-Teilen $SiC$-Pulver und 20 Gew.-Teilen $B_4C$-Pulver wurden 9 Gew.-Teile Novolak-Pulver in Form einer Lösung in Aceton zugesetzt und der dickflüssige Brei so lange an der Luft geknetet, bis praktisch das gesamte Lösungsmittel abgedunstet war. Das nach Beendigung des Knetens erhaltene krümelige Pulver wurde in einer Strahlmühle unter einem Luftdruck von ca. 0,2 MPa zur Entagglomeration und Homogenisierung bis auf eine Schüttdichte von ca. 0,2 bis 0,5 g/cm³ gemahlen und anschliessend in Gummihülsen unter einem Druck von 400 MPa isostatisch zu Platten der Abmessungen 50 × 20 × 7 mm mit einer Gründichte von 1,82 g/cm³ verpresst.

Hierauf wurden die grünen Platten in einen Verkokungsofen unter reduzierender Atmosphäre erhitzt, wobei zur langsamen Pyrolyse des Novolak-Harzes im Laufe von ca. 20 h von Raumtemperatur auf ca. 1000° C aufgeheizt und 8 h bei dieser Temperatur geglüht wurde. Die unter Schutzgas in ca. 36 h auf Raumtemperatur abgekühlten verkokten Platten wurden anschliessend in einem Graphittiegel, der in der Heizzone eines Graphitrohrofens vom Tammann-Typ eingesetzt war, bei 2100° C und einem Vakuum von 10 Pa gesintert. Vor dem Aufheizen wurde der Ofenraum mehrmals mit gereinigtem Argongas gespült. Die Sinterung erfolgte nach folgendem Temperaturschema:

    20-400° C: 60 min
    400-2100° C: 120 min
    Halten bei 2100° C: 30 min

Nach Beendigung der Haltezeit wurde der Ofen abgeschaltet und die Sinterkörper im Ofen auf Raumtemperatur abgekühlt. Die Platten erfuhren einen 7,5%igen Gewichtsverlust sowie eine 16,4%ige Schrumpfung, bezogen auf das Gewicht bzw. die Länge der ungesinterten Grünkörper und weisen eine nach der Auftriebsmethode bestimmte Dichte von 3,00 g/cm³ auf. Die Hälfte der gesinterten Platten wurde anschliessend in eine heissisostatische Presse mit Graphitheizung gegeben und bei 2000° C heissisostatisch gepresst. Der Soll-Druck von 200 MPa wurde bei Endtemperatur erreicht, die Haltezeit betrug 180 min, die Aufheizzeit 120 min. Die nach der Auftriebsmethode bestimmte Dichte der heissisostatisch nachverdichteten Platten war 3,01 g/cm³. Die nachverdichteten Platten wiesen einen SiC-Gehalt von 76,8 Gew.-%, einen $B_4C$-Gehalt von 19,2 Gew.-%, einen Gehalt an freiem Kohlenstoff von 3,7 Gew.-%, einen Restsauerstoffgehalt von 0,08 Gew.-%, einen Stickstoffgehalt von 0,11 Gew.-% und einen Gehalt an metallischen Verunreinigungen von <0,2 Gew.-% auf. Röntgenographisch war deutlich freier Kohlenstoff in Form von Graphit neben hexagonalem, $\alpha$-SiC und rhomboedrischem Borcarbid nachweisbar. Die nach der Mischungsregel gemäss

$$TD = \frac{100}{\dfrac{76,8}{3,21} + \dfrac{19,2}{2,52} + \dfrac{3,7}{2,27}}$$

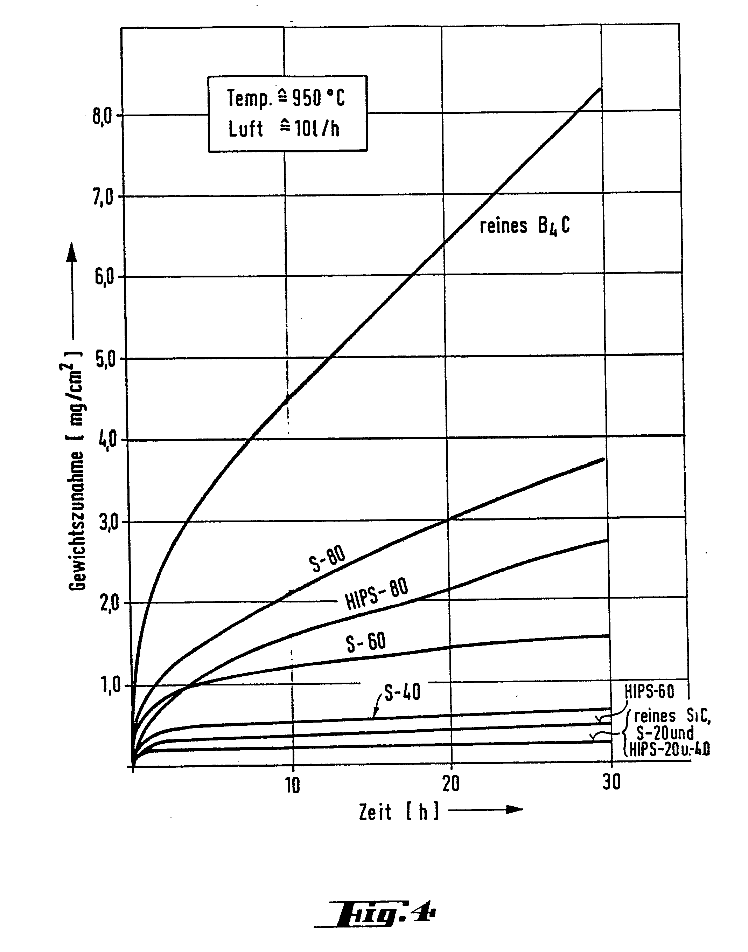

berechnete theoretische Dichte war 3,01 g/cm³. Die auf diesem Wert bezogenen relativen Dichten der vorgesinterten bzw. nachverdichteten Platten betragen demnach 99,7 bzw. 100,0% TD. Von den drucklos gesinterten (S) sowie den nachverdichteten (HIPS) Platten wurden nach Ausführung der Auftriebsdichtemessungen und nach Durchschneiden und Nassschleifen mit einer kunststoffgebundenen 90-µm-Diamantscheibe Prüfstäbchen der Abmessungen 2,0 × 4,0 × 34 mm für die Bestimmung der Biegebruchfestigkeit und Oxidationsbeständigkeit hergestellt. Eine Aussage über die Oxidationsbeständigkeit gibt die Zeitabhängigkeit der Gewichtszunahme (in Milligrammen pro Kubikzentimeter Oberfläche) der Probekörper bei konstanter Prüftemperatur. Nähert sich diese Funktion einem Grenzwert, so können die Körper als Folge der Ausbildung einer zusammenhängenden Deckschicht, welche eine weitere Reaktion der Probekörper mit der Atmosphäre praktisch verhindert, als oxidationsbeständig bezeichnet werden. Die Messungen zur Oxidationsbeständigkeit wurden mit einer registrierenden Thermowaage isotherm bei 950° C an strömender Luft (10 l/h) durchgeführt. Die Gewichtszunahme der Proben wurde bis zu 30stündiger Oxidationsdauer registriert und mit der derjenigen von reinem, dichten Siliciumcarbid und Borcarbid verglichen (s. Fig. 4). Wie aus Fig. 4 hervorgeht, wurde für den drucklos gesinterten (Bez. S-20) sowie für den nachverdichteten (Bez. HIPS-20) Verbundwerkstoff eine mit dem reinen Siliciumcarbid übereinstimmende Oxidationsisotherme erhalten. Die Gewichtszunahme nach 30stündiger Oxidation betrug in diesen Fällen nur 0,2 mg/cm². Sinterkörper aus 76,9 SiC - 19,1 $B_4C$ - 3,7 C (Gew.-%) wiesen also praktisch dieselbe hohe Oxidationsbeständigkeit wie das reine, dichte SiC unter den gewählten Bedingungen auf. Die gute Oxidationsbeständigkeit ist auf die Bildung einer zusammenhängenden, festen Borosilicatschutzschicht zurückzuführen. Der sehr steile und nach 2stündiger Oxidationsdauer nahezu lineare Kurvenverlauf der Isotherme für das reine Borcarbid (s. Fig. 4) resultiert aus der flüssigen Konsistenz der gebildeten $B_2O_3$-Deckschicht und der in diesem Fall erhöhten Diffusionsgeschwindigkeit des Sauerstoffes.

Die Biegebruchfestigkeit der Prüfkörper wurde nach der Vierpunktmethode bei Auflageabständen von 15 mm (oberer) und 30 mm (unterer) gemessen. Die transkristallin brechenden Prüfstäbchen wiesen bei Raumtemperatur folgende mittlere Biegebruchfestigkeitswerte auf (Mittelwerte aus 5 Messungen): 420 N/mm² (S-Stäbchen) und 510 N/mm² (HIPS-Stäbchen). Für die Warmfestigkeit bei 1400° C wurde ein Wert von 520 N/mm² (HIPS-Stäbchen, Argonatmosphäre) erhalten; demnach liegt in den Formkörpern keine Glasphase als Korngrenzenphase vor, die zu einem Abfall der Festigkeiten bei höheren Temperaturen führen könnte.

Die rasterelektronenmikroskopischen Aufnahmen der Bruchflächen zeigen, dass die Restporosität der drucklos gesinterten Proben durch die HIP-Nachverdichtung vollständig geschlossen werden konnte, was in ausgezeichneter Übereinstimmung mit dem Befund der relativen Dichte von 100,0% TD steht. Das Gefüge der geäzten Anschliffe zeigt Kohlenstoffpartikel mit einem Korndurchmesser von <2 µm, die in einer Matrix aus feinen $\alpha$-SiC- und $B_4C$-Körnern der mittleren Korngrösse 1,5 µm eingebettet sind.

### Beispiele 2 bis 4

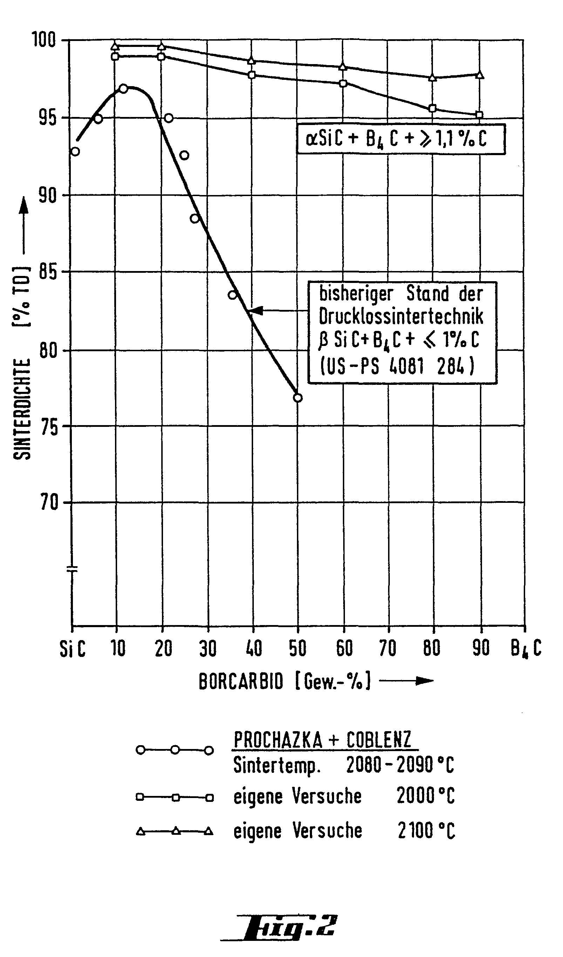

Beispiel 1 wurde wiederholt, mit den Abänderungen, dass von einem SiC/$B_4C$-Gewichtsverhältnis 60:40, 40:60 sowie 20:80 ausgegangen und der Novolak-Zusatz im Bereich 11 bis 15 Gew.-% variiert wurde. Die Ergebnisse sind in den Tabellen 2 und 3 zusammengefasst sowie in den Fig. 2 bis 4 dargestellt. Fig. 2, in der auch zusätzlich Ergebnisse der Beispiele 5, 6, 9, 12, 15, 18, 20 und 21 graphisch dargestellt sind, gibt einen Vergleich der bei verschiedenen SiC/$B_4C$-Aus-

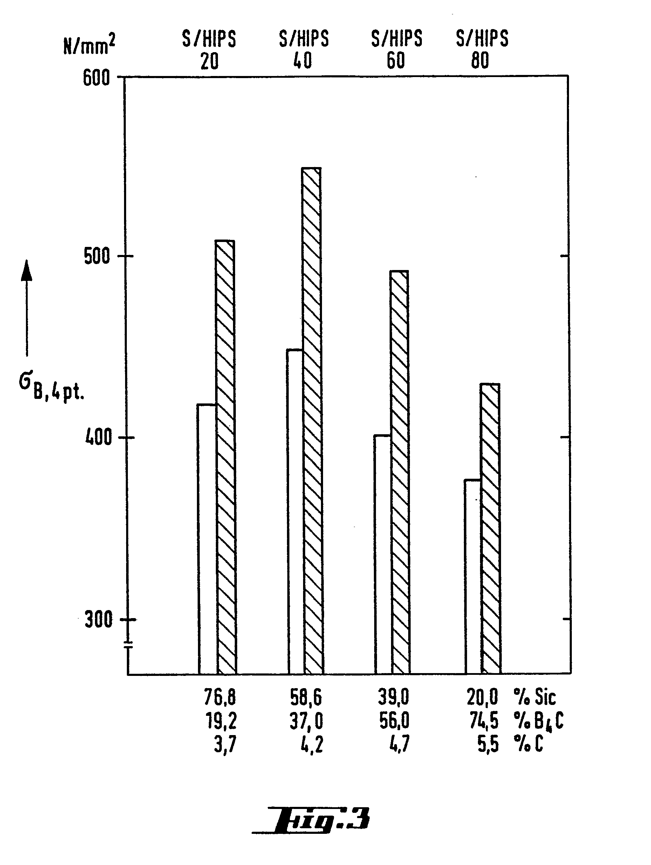

gangszusammensetzungen durch Drucklossinterung nach dem erfindungsgemässen Verfahren sowie dem vorbekannten Verfahren gemäss US-A Nr. 4081284 (Prochazka und Coblenz) erreichbaren relativen Sinterdichten. Deutlich ist zu erkennen, dass nach dem erfindungsgemässen Verfahren über die gesamte Systembreite, d. h. von Ausgangsgewichtsverhältnissen $SiC/B_4C$ von 90:10 bis 10:90 relative Dichten von über 97% TD bei der Drucklossinterung erreicht werden können. Dieses Ergebnis hebt sich deutlich vom Stand der Technik gemäss der US-A ab, wonach nur bei rund 11% Borcarbid ähnlich hohe Sinterdichten erreicht wurden. Die nach dem erfindungsgemässen Verfahren erhaltenen Formkörper der Beispiele 2, 3 und 4 weisen neben einer zweiphasigen Matrix aus $\alpha$-SiC und Borcarbid als dritte Phase freien Kohlenstoff in Mengen von 4,2, 4,7 und 5,5 Gew.-% auf. Das Gewichtsverhältnis $SiC/B_4C$ in der Sinterkörpermatrix stimmte gut mit dem der Ausgangspulversansätze 60:40, 40:60 und 20:80 überein (s. Tabelle 2). Der Einfluss der heisssisostatischen Nachverdichtung auf die Dichte, mittlere Gefügekorngrösse und Biegebruchfestigkeit der drucklos gesinterten Körper der Beispiele 1 bis 4 geht aus Tabelle 3 und Fig. 3 hervor. Wie hieraus ersichtlich, ist die Biegebruchfestigkeit der auf relative Dichten von über 99,5% TD nachverdichteten Proben gegenüber dem „ungehipten" Sinterzustand um 14 bis 23% erhöht, während die mittleren Korngrössen sich praktisch nicht geändert haben. Weiterhin ist aus Fig. 3 erkennbar, dass die Körper des Beispieles Nr. 2, d. h. mit einem $SiC/B_4C$-Gewichtsverhältnis von etwa 60:40 und einem Gehalt an freiem Kohlenstoff von 4,2 Gew.-% die höchsten Biegebruchfestigkeiten aufweisen. Ein Vergleich der Oxidationsbeständigkeit der vorverdichteten (S) und nachverdichteten (HIPS) Formkörper der Beispiele 2, 3 und 4 ist Fig. 4 zu entnehmen; die diesen Beispielen entsprechenden Oxidationsisothermen sind mit S- und HIPS-40, -60 und -80 gekennzeichnet. Wie hieraus ersichtlich, ist bei konstanter Phasenzusammensetzung die Oxidationsgeschwindigkeit der „nachgehipten" Proben gegenüber den nicht „nachgehipten" vermindert (vgl. Kurve S-80 mit HIPS-80 sowie Kurve S-60 mit HIPS-60). Ferner können borcarbidreichere nachverdichtete Proben sogar eine höhere Oxidationsbeständigkeit als borcarbidärmere nicht nachverdichtete Proben aufweisen. Wie aus dem Vergleich der Kurven HIPS-60 mit S-40 und S-60 hervorgeht, wird die aufgrund des höheren Siliciumcarbidgehaltes im Vergleich zu S-60 naturgemäss niedrigere Oxidationsgeschwindigkeit der Probe S-40 von der noch niedrigeren Oxidationsgeschwindigkeit der nachverdichteten Probe HIPS-60 unterboten. Auf diese Weise kann der Einsatz eines dichten borcarbidreichen Werkstoffes auch auf Anwendungen in oxidierender Atmosphäre ausgedehnt werden, die bisher nur dem reinen SiC oder sehr SiC-reichen Werkstoffen vorbehalten waren.

## Beispiele 5 bis 22

Grünkörper der Beispiele 1 bis 4 sowie Grünkörper, die aus den in Beispiel 1 angegebenen $\alpha$-SiC- und $B_4C$-Sinterpulvern jedoch unter Verwendung von Gewichtsverhältnissen $SiC/B_4C$ von 90:10 bzw. 10:90 und Novolak-Zusätzen von 8 bzw. 16% hergestellt worden waren, wurden gemeinsam drucklos gesintert, wobei als Sinteratmosphäre anstelle Vakuum (10 Pa Argon) strömendes Schutzgas (ca. 0,1 MPa Argon) verwendet und die Sintertemperatur zwischen 1900 und 2100° C variiert wurde. Die Charakterisierung der Ausgangsansätze sowie die Ergebnisse der Drucklossinterung sind in Tabelle 4 zusammengestellt. Der Vergleich der Drucklossinterergebnisse von Beispiele 1 bis 4 mit den Ergebnissen der Beispiele 8, 11, 14 und 17 zeigt, dass bei Verwendung einer Sintertemperatur von 2100° C unabhängig von der Wahl der Sinteratmosphäre (Vakuum oder strömendes Schutzgas) relative Sinterdichten von oberhalb 97% TD erhalten wurden. Wie aus Tabelle 4 weiter hervorgeht, wurden bei niedrigeren Sintertemperaturen auch geringere Verdichtungen erhalten. Während die bei 2000° C Sintertemperatur erhaltenen Sinterkörper noch relative Dichten von 95,3 bis 99,0% TD aufwiesen, stellten sich bei 1900° C Sintertemperatur bereits sehr mangelhafte Verdichtungen von 76 bis 90,4% TD ein, die keine hüllenlose HIP-Nachverdichtung mehr erlauben.

## Beispiele 23 bis 34

Die Charakterisierung der hierfür verwendeten Carbidpulver ist in Tabelle 5 zusammengestellt. Ausgehend von diesen Sinterpulvern wurden analog den Beispielen 1 und 4 Carbidgemenge mit Gewichtsverhältnissen $SiC/B_4C$ von 80:20 und 20:80 mit verschiedenen Mengen an Kohlenstoffzusatz (s. Tabelle 6) vermischt, wobei der Kohlenstoffzusatz in Form der Lösung des Phenolformaldehyd-Novolaks in Aceton sowie zusätzlich als elementarer Kohlenstoff in Form von Russ (spez. Oberfläche: 150 m²/g) eingebracht wurde. Insbesondere wurde hier der Kohlenstoffzusatz in einem weiten Bereich entsprechend einem Gehalt an freiem Kohlenstoff von 0,8 bis 14,7 Gew.-% C in der resultierenden Mischung aus Siliciumcarbid, Borcarbid und freiem Kohlenstoff variiert. Aus den homogenisierten, pressfertigen Mischungen wurden in Gummihülsen unter einem Druck von 500 MPa zylindrische Formkörper von 8 mm Durchmesser und 40 mm Länge mit einer Gründichte von 55 bis 65% TD gepresst. Die Sinterung der Grünkörper sowie die heisssisostatische Nachverdichtung der Sinterkörper erfolgte analog wie in Beispiel 1 beschrieben, wobei nur die Grünkörper der Beispiele 31 bis 34 zur Pyrolyse der hohen Novolak-Zusätze von 10 Gew.-% in einem Verkokungsofen vorerhitzt wurden. Die Beispiele 27 bis 32 zeigen, dass es nach dem erfindungsgemässen Verfahren — unabhängig von der Wahl hochborcarbid- oder hochsiliciumcarbidhaltiger Carbidgemische — mit Kohlenstoff enthaltenden Zusätzen in solchen Mengen, die zu Formkörpern mit einem Gehalt von etwa 1,1 bis 10 Gew.-% an freiem Kohlenstoff führen, gelingt, gute Ergebnisse im Hinblick auf die Verdichtung zu erhalten. In diesem Falle wiesen alle HIP-nachverdichteten Sinterkörper relative Dichten im Bereich 99,8 bis 100,0% TD auf (s. Tabelle 6).

In den zum Vergleich mit unzureichenden Mengen an Kohlenstoffzusatz (Beispiele 23 bis 26) sowie mit zu viel Kohlenstoffzusatz (Beispiele 33 bis 34) durchgeführten Versuchen wurden nur sehr mangelhafte relative Sinterdichten von 82 bis 93% TD erhalten; durch hüllenloses, heissisostatisches Pressen liess sich in diesen Fällen keine Nachverdichtung mehr erzielen.

### Tabelle 1

*Analysen der Sinterpulver (Gew.-%)*

|      | α-SiC   | $B_4C$   |
|------|---------|----------|
| B    | 0,01    | 76,7     |
| Si   | 68,8    | 0,26     |
| C    | 29,8*   | 20,4**   |
| O    | 0,85    | 2,30     |
| N    | 0,11    | 0,19     |
| Mg   | <0,01   | <0,01    |
| Al   | 0,10    | 0,01     |
| Ca   | <0,01   | <0,01    |
| Ti   | 0,05    | 0,06     |
| Fe   | 0,02    | 0,05     |

\* davon 0,89% als freier C
\*\* davon 0,80% als freier C

### Tabelle 2

*Charakterisierung der Ansätze und erhaltene Sinterergebnisse*

| Beispiel Nr. | 1 | 2 | 3 | 4 |
|---|---|---|---|---|
| Gewichtsverhältnis der Carbidpulver SiC/$B_4C$ | 80:20 | 60:40 | 40:60 | 20:80 |
| Novolak-Zusatz bezogen auf 100 Teile SiC + $B_4C$ (%) | 9,0 | 11,0 | 13,0 | 15,0 |
| Freier Kohlenstoff in der Ausgangsmischung* (Gew.-% C) | 4,5 | 5,2 | 6,0 | 6,7 |
| Gründichte (% TD) | 60,5 | 61,1 | 61,7 | 62,2 |
| Lin. Schrumpfung (%) | 16,4 | 16,0 | 15,7 | 15,4 |
| Gewichtsverlust (%) | 7,5 | 8,5 | 9,4 | 10,7 |
| Relative Dichte der drucklos gesinterten Körper (% TD) | 99,7 | 98,6 | 98,2 | 97,7 |
| Relative Dichte der nachverdichteten Körper (% TD) | 100,0 | 99,7 | 100,0 | 99,6 |
| Phasenzusammensetzung der nachverdichteten Körper | | | | |
| Gew.-% SiC | 76,8 | 58,6 | 39,0 | 20,0 |
| Gew.-% $B_4C$ | 19,2 | 37,0 | 56,0 | 74,5 |
| Gew.-% $C_{frei}$ | 3,7 | 4,2 | 4,7 | 5,5 |
| Theoretische Dichte (TD) der Verbundwerkstoffe (g/cm³) | 3,01 | 2,88 | 2,74 | 2,62 |

\* bestehend aus $B_4C$, SiC und $C_{frei}$

### Tabelle 3

*Dichte, Biegebruchfestigkeit und mittlere Gefügekorngrösse der gesinterten (=S) sowie gesinterten und nachverdichteten (=HIPS) Formkörper*

| Beispiel Nr. | 1 | 2 | 3 | 4 |
|---|---|---|---|---|
| Dichte $\rho_s$ der S-Körper (g/cm³) | 3,00 | 2,84 | 2,69 | 2,56 |
| Dichte $\rho_{HIPS}$ der HIPS-Körper (g/cm³) | 3,01 | 2,87 | 2,74 | 2,61 |
| Theoretische Dichte der Verbundwerkstoffe (g/cm³) | 3,01 | 2,88 | 2,74 | 2,62 |
| Mittlere Korngrösse der S-Körper (µm) | 1,5 | 1,9 | 1,5 | 1,8 |
| Mittlere Korngrösse der HIPS-Körper (µm) | 1,5 | 1,7 | 1,8 | 1,8 |
| Biegebruchfestigkeit $\sigma_{B, 4 Punkte}$ S-Körper (N/mm²) | 420 | 449 | 402 | 377 |
| HIPS-Körper | 510 | 550 | 493 | 430 |

*Tabelle 4*

*Ergebnisse der Drucklossinterung bei verschiedenen Sintertemperaturen
in strömender Argonschutzgasatmosphäre ( ~ 1 bar Argon)*

| Beispiel Nr. | Gewichts-verhältnis SiC/B$_4$C | Novolak-zusatz (%) | Freier Kohlen-stoff* (% C) | Grün-dichte (% TD) | Sinter-temperatur (°C) | Relative Dichte der S-Körper (% TD) |
|---|---|---|---|---|---|---|
| 5 | | | | | 2100 | 99,6 |
| 6 | 90:10 | 8,0 | 4,1 | 60,0 | 2000 | 99,0 |
| 7 V | | | | | 1900 | 90,4** |
| 8 | | | | | 2100 | 99,3 |
| 9 | 80:20 | 9,0 | 4,5 | 60,5 | 2000 | 99,0 |
| 10 V | | | | | 1900 | 86,7** |
| 11 | | | | | 2100 | 98,3 |
| 12 | 60:40 | 11,0 | 5,2 | 61,1 | 2000 | 97,9 |
| 13 V | | | | | 1900 | 83,7** |
| 14 | | | | | 2100 | 97,8 |
| 15 | 40:60 | 13,0 | 6,0 | 61,7 | 2000 | 97,3 |
| 16 V | | | | | 1900 | 79,9** |
| 17 | | | | | 2100 | 97,3 |
| 18 | 20:80 | 15,0 | 6,7 | 62,2 | 2000 | 95,8 |
| 19 V | | | | | 1900 | 77,5** |
| 20 | | | | | 2100 | 98,0 |
| 21 | 10:90 | 16,0 | 7,0 | 62,3 | 2000 | 95,3 |
| 22 V | | | | | 1900 | 76,0** |

Zeichenerklärung:
  TD = theoretische Dichte
  V = zum Vergleich
   * in der SiC-B$_4$C-C Ausgangsmischung
  ** Versuche zur hüllenlosen HIP-Nachverdichtung waren negativ

*Tabelle 5*

*Analysen der Sinterpulver (Gew.-%)*

| | α-SiC | B$_4$C |
|---|---|---|
| B | 0,01 | 76,3 |
| Si | 69,1 | 0,15 |
| C | 30,1* | 22,0** |
| O | 0,42 | 1,05 |
| N | 0,04 | 0,22 |
| Mg | <0,01 | <0,01 |
| Al | 0,05 | 0,02 |
| Ca | <0,01 | <0,01 |
| Ti | 0,05 | 0,02 |
| Fe | 0,04 | 0,02 |
| Spezifische Oberfläche (m²/g) | 16,5 | 21,8 |
| Maximale Teilchengrösse (μm) | ~2 | ~2 |

 * davon 0,79% als freier C
** davon 0,95% als freier C

*Tabelle 6*

*Charakterisierung der Ausgangsansätze und erhaltene Sinterergebnisse*

| Beispiel Nr. | Gewichts- verhältnis SiC/B$_4$C | Novolak- zusatz (%) | Russzusatz (%) | Freier Kohlenstoff* (% C) | Rel. Dichte der S-Körper (% TD) | Rel. Dichte der HIPS- Körper (% TD) | Freier Kohlenstoff** (% C) |
|---|---|---|---|---|---|---|---|
| 23 V | 80:20 | 0 | 0 | 0,8 | 82,4 | 84,9 | 0,1 |
| 25 V | 80:20 | 1 | 0 | 1,2 | 93,1 | 94,4 | 0,7 |
| 27 | 80:20 | 2 | 0 | 1,7 | 97,0 | 100,0 | 1,3 |
| 29 | 80:20 | 4 | 0 | 2,4 | 98,2 | 99,8 | 2,0 |
| 31 | 80:20 | 10 | 6 | 10,0 | 99,5 | 99,9 | 9,5 |
| 33 V | 80:20 | 10 | 12 | 14,6 | 90,0 | 90,8 | 14,0 |
| 24 V | 20:80 | 0 | 0 | 0,9 | 82,5 | 82,0 | 0,2 |
| 26 V | 20:80 | 1 | 0 | 1,3 | 90,5 | 91,3 | 0,8 |
| 28 | 20:80 | 2 | 0 | 1,8 | 97,8 | 99,9 | 1,2 |
| 30 | 20:80 | 4 | 0 | 2,5 | 98,5 | 100,0 | 1,9 |
| 32 | 20:80 | 10 | 6 | 10,1 | 97,9 | 99,9 | 9,6 |
| 34 V | 20:80 | 10 | 12 | 14,7 | 92,3 | 93,7 | 14,2 |

Zeichenerklärung:
  * in der Ausgangsmischung
  ** im nachverdichteten Sinterkörper

V = zum Vergleich
S-Körper = drucklos gesinterter Formkörper
HIPS-Körper = nachverdichteter Sinterkörper

**Patentansprüche**

1. Polykristalline, praktisch porenfreie Sinterkörper bestehend aus α-Siliciumcarbid, Borcarbid und freiem Kohlenstoff, deren mengenmässige Anteile in Gewichtsprozent im Dreistoffsystem B-Si-C durch die Trapezfläche mit den Eckpunkten

a = 89,0% B$_4$C − 9,9% α-SiC − 1,1% C
b = 9,9% B$_4$C − 89,0% α-SiC − 1,1% C
c = 9,0% B$_4$C − 81,0% α-SiC − 10,0% C
d = 81,0% B$_4$C − 9,0% α-SiC − 10,0% C

festgelegt sind, mit einer Dichte von mindestens 99% der theoretisch möglichen Dichte, einer mittleren Gefügekorngrösse von <20 µm und einer 4-Punkt-Biegebruchfestigkeit von mindestens 400 N/mm², die aus feinkörnigen Gemischen von α-Siliciumcarbid, Borcarbid, Kohlenstoff und/oder zu Kohlenstoff verkokbarem organischem Material durch druckloses Sintern und anschliessender hüllenloser Nachverdichtung der so erhaltenen Sinterkörper durch heissisostatisches Pressen im Hochdruckautoklaven unter Verwendung eines inerten Gases als Druckübertragungsmedium hergestellt worden sind.

2. Sinterkörper gemäss Anspruch 1, die metallische und nichtmetallische Verunreinigungen von insgesamt <1 Gew.-% enthalten.

3. Verfahren zur Herstellung der Sinterkörper gemäss den Ansprüchen 1 und 2, dadurch gekennzeichnet, dass feinteilige Pulver aus α-Siliciumcarbid und Borcarbid im Gewichtsverhältnis SiC/B$_4$C von 90:10 bis 10:90 mit einem Kohlenstoff enthaltenden Zusatz in Form von feinteiligem Kohlenstoff und/oder einem bei Temperaturen bis zu 1000° C unter Bildung von Kohlenstoff verkokbarem, organischen Material, in einer 1,5 bis 12 Gew.-% freiem Kohlenstoff entsprechenden Menge homogen vermischt, unter Formgebung zu Grünkörpern mit einer Dichte von mindestens 50%

der theoretischen Dichte verpresst, die so erhaltenen Grünkörper in Gegenwart einer Schutzgasatmosphäre oder im Vakuum bei Temperaturen von 1950 bis 2150° C zu Körpern mit einer Dichte von mindestens 95% der theoretischen Dichte drucklos gesintert und diese vorverdichteten Sinterkörper anschliessend durch heissisostatisches Pressen bei Temperaturen von 1850 bis 2150° C unter einem Gasdruck von mindestens 10 MPa hüllenlos bis zu einer Dichte von mindestens 99% der theoretischen Dichte nachverdichtet werden.

4. Verfahren gemäss Anspruch 3, dadurch gekennzeichnet, dass als Siliciumcarbidpulver solche mit einer spezifischen Oberfläche von 2 bis 50 m²/g verwendet werden.

5. Verfahren gemäss Anspruch 3, dadurch gekennzeichnet, dass als Borcarbidpulver solche mit einem Bor/Kohlenstoff-Atomverhältnis im Bereich von 3,8 bis 4,2 und mit einer spezifischen Oberfläche von 3 bis 60 m²/g verwendet werden.

6. Verfahren gemäss Anspruch 3, dadurch gekennzeichnet, dass als Kohlenstoff enthaltender Zusatz Russ oder kolloidaler Graphit mit einer spezifischen Oberfläche im Bereich von 10 bis 400 m²/g verwendet werden.

7. Verfahren gemäss Anspruch 3, dadurch gekennzeichnet, dass als Kohlenstoff enthaltender Zusatz ein Phenol/Formaldehyd-Kondensationsprodukt oder Steinkohlenteerpech verwendet wird.

8. Verfahren gemäss Anspruch 3, dadurch gekennzeichnet, dass die vorgeformten Grünkörper vor der drucklosen Sinterung in Gegenwart einer inerten oder reduzierenden Atmosphäre bei Temperaturen im Bereich zwischen 100 und 1500° C vorerhitzt werden.

9. Verfahren gemäss Anspruch 3, dadurch gekennzeichnet, dass die drucklose Sinterung der vorgeformten Grünkörper in einer Schutzgasatmosphäre bei einem Druck von etwa 0,1 MPa oder im Vakuum bei einem Druck von < 5000 Pa durchgeführt wird.

10. Verfahren gemäss Anspruch 3, dadurch gekennzeichnet, dass die hüllenlose Nachverdichtung der vorverdichteten Sinterkörper bei einer Temperatur bis zu 2050° C unter einem Gasdruck von 150 bis 250 MPa durchgeführt wird.

**Claims**

1. Substantially pore-free sintered polycrystalline articles consisting of α-silicon carbide, boron carbide and free carbon, the quantitive proportions of which, in percent by weight, are defined by the trapeziform area having, in the three-substance system B/Si/C, the corner points

a = 89.0% $B_4C$ −  9.9% α-SiC −  1.1% C  
b =  9.9% $B_4C$ − 89.0% α-SiC −  1.1% C  
c =  9.0% $B_4C$ − 81.0% α-SiC − 10.0% C  
d = 81.0% $B_4C$ −  9.0% α-SiC − 10.0% C  

the articles having a density of at least 99% of the theoretically possible density, an average structural grain size of less than 20 μm, and a 4-point bending strength of at least 400 N/mm², and having been manufactured from fine-grained mixtures of α-silicon carbide, boron carbide, carbon and/or organic material that can be coked to form carbon, by pressureless sintering and subsequent caseless densification of the resulting sintered articles by hot isostatic pressing in a high-pressure autoclave using an inert gas as pressure-transfer medium.

2. Sintered articles according to Claim 1, which contain metallic and non-metallic impurities totalling less than 1% by weight.

3. Process for the manufacture of the sintered articles according to Claims 1 and 2, characterised in that finely particulate powders of α-silicon carbide and boron carbide in a weight ratio of SiC/$B_4C$ of from 90:10 to 10:90 are homogeneously mixed with a carbon-containing additive in the form of finely particulate carbon and/or an organic material that can be coked at temperatures up to 1,000° C to form carbon, in an amount corresponding to from 1.5 to 12% by weight of free carbon, the mixture is pressed, while being shaped, to form green articles having a density of at least 50% of the theoretical density, the green articles thus obtained are subjected to pressureless sintering at temperatures of from 1,950 to 2,150° C in the presence of a protective gas atmosphere or in vacuo, to form articles having a density of at least 95% of the theoretical density and those pre-densified sintered articles are then subjected to a second densification to a density of at least 99% of the theoretical density, by isostatic hot pressing, without casings, at temperatures of from 1,850 to 2,150° C under a gas pressure of at least 10 MPa.

4. Process according to Claim 3, characterised in that there is used, as the silicon carbide powder, a powder having a specific surface area of from 2 to 50 m²/g.

5. Process according to Claim 3, characterised in that there is used, as the boron carbide powder, a powder having a boron/carbon atomic ratio within the range of from 3.8 to 4.2 and having a specific surface area of from 3 to 60 m²/g.

6. Process according to Claim 3, characterised in that there is used, as the carbon-containing additive, carbon black or colloidal graphite having a specific surface area within the range of from 10 to 400 m²/g.

7. Process according to Claim 3, characterised in that there is used, as the carbon-containing additive, a phenol/formaldehyde condensation product or coal/tar pitch.

8. Process according to Claim 3, characterised in that, prior to the pressureless sintering, the preshaped green articles are preheated in the presence of an inert or reducing atmosphere at temperatures within the range of between 100 and 1,500° C.

9. Process according to Claim 3, characterised in that the preshaped green articles are subjected to pressureless sintering in a protective gas atmosphere at a pressure of approximately 0.1 MPa or in vacuo at a pressure of less than 5,000 Pa.

10. Process according to Claim 3, characterised in that the pre-densified sintered articles are subjected to a second densification without casings at a temperature of up to 2,050° C under a gas pressure of from 150 to 250 MPa.

**Revendications**

1. Corps frittés polycristallins, pratiquement sans pores, consistant en du carbure de silicium α, du carbure de bore et du carbone libre, dont les quantités pondérales, en pourcentage en poids dans le système ternaire B-Si-C, sont établies par la surface de trapèze ayant pour sommets

a = 89,0% $B_4C$ −  9,9% SiCα −  1,1% C  
b =  9,9% $B_4C$ − 89,0% SiCα −  1,1% C  
c =  9,0% $B_4C$ − 81,0% SiCα − 10,0% C  
d = 81,0% $B_4C$ −  9,0% SiCα − 10,0% C  

ayant une masse volumique de 99% au moins de la masse volumique théoriquement possible, une grosseur moyenne des grains de structure inférieure à 20 μm et une résistance à la flexion 4 points d'au moins 400 N/mm², qui ont été produits à partir de mélanges en grains fins de carbure de silicium α, de carbure de bore, de carbone et/ou d'une matière organique cokéfiable en donnant du carbone, par frittage sans compression puis compactage ultérieur, sans enveloppe, des corps frittés ainsi obtenus par compression isostatique à chaud dans des autoclaves haute pression, avec utilisation d'un gaz inerte comme milieu de transmission de la pression.

2. Corps frittés selon la revendication 1, qui contiennent des impuretés métalliques et non métalliques représentant au total moins de 1% en poids.

3. Procédé de production des corps frittés selon les revendications 1 et 2, caractérisé en ce qu'on mélange de la poudre en fines particules de carbure de silicium α et de carbure de bore selon un

rapport pondéral SiC/B$_4$C de 90:10 à 10:90 avec un additif contenant du carbone, sous forme de carbone en fines particules, et/ou une matière organique cokéfiable à des températures allant jusqu'à 1000° C avec formation de carbone, en une quantité correspondant à 1,5 à 12% en poids de carbone libre, pour obtenir un mélange homogène, on comprime avec formage en des corps verts ayant une masse volumique représentant au moins 50% de la masse volumique théorique, on fritte sans compression les corps verts ainsi obtenus, en présence d'une atmosphère de gaz protecteur ou sous vide, à des températures de 1950 à 2150° C pour obtenir des corps ayant une masse volumique représentant au moins 95% de la masse volumique théorique, et on soumet ensuite ces corps frittés précompactés à un compactage ultérieur par compression isostatique à chaud à des températures de 1850 à 2150° C sous une pression de gaz d'au moins 10 MPa, sans enveloppe, jusqu'à obtenir une masse volumique représentant au moins 99% de la masse volumique théorique.

4. Procédé selon la revendication 3, caractérisé en ce qu'on utilise comme poudres de carbure de silicium celles ayant une surface spécifique de 2 à 50 m²/g.

5. Procédé selon la revendication 3, caractérisé en ce qu'on utilise comme poudres de carbure de bore celles ayant un rapport atomique bore/carbone compris entre 3,8 et 4,2 et ayant une surface spécifique de 3 à 60 m²/g.

6. Procédé selon la revendication 3, caractérisé en ce qu'on utilise comme additif contenant du carbone du noir de carbone ou du graphite colloïdal ayant une surface spécifique comprise entre 10 et 400 m²/g.

7. Procédé selon la revendication 3, caractérisé en ce qu'on utilise comme additif contenant du carbone un produit de condensation phénol/formaldéhyde ou un brai de goudron de houille.

8. Procédé selon la revendication 3, caractérisé en ce que, avant le frittage sans compression, on préchauffe les corps verts préformés, en présence d'une atmosphère inerte ou réductruce, à des températures comprises entre 100 et 1500° C.

9. Procédé selon la revendication 3, caractérisé en ce qu'on effectue le frittage sans compression des corps verts préformés en opérant dans une atmosphère de gaz protecteur sous une pression d'environ 0,1 MPa ou sous vide à une pression inférieure à 5000 Pa.

10. Procédé selon la revendication 3, caractérisé en ce qu'on effectue le compactage ultérieur sans enveloppe des corps frittés précompactés en opérant à une température allant jusqu'à 2050° C sous une pression de gaz de 150 à 250 MPa.

| Punkt im System | Phasenzusammensetzung %B₄C − %SiC − %C | | |
|---|---|---|---|
| a | 89,0 | 9,9 | 1,1 |
| b | 9,9 | 89,0 | 1,1 |
| c | 9,0 | 81,0 | 10,0 |
| d | 81,0 | 9,0 | 10,0 |

Fig:1

Fig. 2

Fig. 3

Fig. 4